# EUROPEAN PATENT APPLICATION

(11) **EP 4 528 553 A1**
(43) Date of publication of application: **26.03.2025**
(21) Application number: 23870347.4
(22) Date of filing: 13.09.2023
(51) Int. Cl.: G06F 16/958

(54) **CARD UPDATING METHOD AND RELATED APPARATUS**

(30) Priority: 27.09.2022 CN 202211182171
(71) Applicant: Huawei Technologies Co., Ltd., Shenzhen, Guangdong 518129 (CN)
(72) Inventor: YANG, Zhongkai, Shenzhen, Guangdong 518129 (CN); WANG, Genliang, Shenzhen, Guangdong 518129 (CN); YAN, Wenhao, Shenzhen, Guangdong 518129 (CN)
(74) Representative: Körber, Martin Hans
(86) International application number: PCT/CN2023/118662
(87) International publication number: WO 2024/067110

(57) **Abstract**

A card update method and a related apparatus are provided. The method includes: A first device generates card data corresponding to a target card, and sends a card identifier and the card data to a second device based on a device identifier, so that the second device updates the target card based on the card identifier and the card data. The device identifier identifies the second device, the card identifier identifies the target card, and the target card is installed in the second device. Throughout the process, the second device does not need to launch a provider of the target card. In addition, the provider of the target card does not need to reside in the background of the second device. This can greatly save system resources and reduce power consumption of the second device.

## Description

This application claims priority to Chinese Patent Application No. 202211182171.1, filed with the China National Intellectual Property Administration on September 27, 2022 and entitled "CARD UPDATE METHOD AND RELATED APPARATUS", which is incorporated herein by reference in its entirety.

### TECHNICAL FIELD

This application relates to the field of terminal technologies, and in particular, to a card update method and a related apparatus.

### BACKGROUND

Currently, most electronic devices provide a card function, and can display more key information elements to a user, for example, a card such as Schedule, Weather, Music Player, and Video Player.

Usually, the electronic device may launch a card provider, and obtain card data via the card provider, to update the card. The card provider is configured to control display content, a control layout, and a tap event of a card. However, the foregoing manner causes high power consumption of the electronic device.

### SUMMARY

This application provides a card update method and a related apparatus, to reduce power consumption of an electronic device during card update.

According to a first aspect, this application provides a card update method. The method may be performed by a first device, or may be performed by a component (such as a chip or a chip system) configured in a first device, or may be implemented by a logical module or software that can implement all or some functions of a first device. This is not limited in this application.

For example, the method includes: generating card data corresponding to a target card; and sending a card identifier and the card data to a second device based on a device identifier. The device identifier identifies the second device, the card identifier identifies the target card, the target card is installed in the second device, and the card data is used to update the target card in the second device.

It may be understood that, in a case in which a corresponding application is not installed on the second device, the first device may further push a style of the target card to the second device, for example, a size of the target card, an element (such as a title, an abstract, a picture, or a text description) included in the target card, and a layout of all elements in the target card (that is, locations of all elements in the target card).

In the foregoing technical solution, the first device generates the card data corresponding to the target card, and actively sends, based on the device identifier, the card identifier and the card data to the second device corresponding to the device identifier, so that the second device updates the target card based on the card identifier and the card data. Throughout the process, the second device does not need to launch a provider of the target card. In addition, the provider of the target card does not need to reside in the background of the second device. This can greatly save system resources and reduce power consumption of the second device.

With reference to the first aspect, in some possible implementations of the first aspect, before the generating card data corresponding to a target card, the method further includes: receiving the device identifier and the card identifier from the second device.

Before generating the card data, the first device may receive the device identifier and the card identifier from the second device, so that the first device specifies the second device based on the device identifier, and specifies, based on the card identifier, the target card whose card data needs to be updated. In this way, when there are a plurality of devices and each device has a plurality of cards, it is convenient for the first device to specify a device and a target card whose card data needs to be updated.

With reference to the first aspect, in some possible implementations of the first aspect, the method further includes: receiving configuration information of the target card from the second device; and the generating card data corresponding to a target card includes: generating the card data based on the configuration information.

The configuration information of the target card includes, for example, but is not limited to: a size of the target card, an element (such as a title, an abstract, a picture, or a text description) included in the target card, and a layout of all elements in the target card (that is, locations of all elements in the target card). The first device may receive the configuration information of the target card, to generate the card data based on the configuration information.

With reference to the first aspect, in some possible implementations of the first aspect, the target card corresponds to an application installed on the second device; or the target card is an empty card created on the second device.

The target card may correspond to an application installed on the second device. That is, the target card may be a card corresponding to an application installed on the second device, for example, a card corresponding to Sports and Health. The target card may alternatively be an empty card created on the second device. That is, an application corresponding to the target card is not installed on the second device, and the empty card may be used to display a push notification of any application. For example, an application such as News or Sports is not installed on the second device, but related content of the application may be displayed by using the empty card. In this way, memory of the second device can be saved. In addition, in a case in which an application is not installed, a user can receive related content of the application in a form of a card, thereby greatly improving user experience.

With reference to the first aspect, in some possible implementations of the first aspect, in a case in which the target card is an empty card created on the second device, the method further includes: receiving user feedback from the second device, where the user feedback is used to reflect a preference of a user for the card data; and determining, based on the user feedback, whether to continue pushing the card data to the second device.

The empty card may be used to display related content of any application. In this way, the user may feed back, by operating the second device, a preference for card data corresponding to an application currently pushed on the empty card. For the first device, the user feedback is received from the second device, and then the first device determines, based on the user feedback, whether to continue pushing the card data corresponding to the application to the second device. In other words, the first device may subsequently push only content that the user is interested in, which helps improve user experience.

With reference to the first aspect, in some possible implementations of the first aspect, the first device is a server of the application corresponding to the target card; and the sending a card identifier and the card data to a second device based on a device identifier of the second device includes: sending, by using a push server, the card identifier and the card data to the second device corresponding to the device identifier, where the push server is configured to actively push card data to the second device.

With reference to the first aspect, in some possible implementations of the first aspect, the first device is a device discovered by the second device; and the sending a card identifier and the card data to a second device based on a device identifier includes: sending the card identifier and the card data to the second device corresponding to the device identifier.

With reference to the first aspect, in some possible implementations of the first aspect, the first device and the second device meet at least one of the following: the first device and the second device have a same account; the first device and the second device are associated with a same device; or the first device is a device authorized by the second device.

The first device and the second device may be devices having a same account, or the first device and the second device are associated with a same device, or the first device is a device authorized by the second device. This helps avoid a malicious attack from the first device, and further helps ensure security of the second device.

According to a second aspect, this application provides a card update method. The method may be performed by a second device, or may be performed by a component (such as a chip or a chip system) configured in a second device, or may be implemented by a logical module or software that can implement all or some functions of a second device. This is not limited in this application.

For example, the method includes: receiving a card identifier and card data from a first device, where the card identifier identifies a target card installed in the second device; and updating the target card based on the card identifier and the card data.

In the foregoing technical solution, the second device updates the target card based on the card identifier and the card data that are received from the first device. Throughout the process, the second device does not need to request to update the target card, and also does not need to launch a provider of the target card. In addition, the provider of the target card does not need to reside in the background of the second device. This can greatly save system resources and reduce power consumption of the second device.

With reference to the second aspect, in some possible implementations of the second aspect, before the receiving a card identifier and card data from a first device, the method further includes: creating the target card in response to an operation of a user; and sending a device identifier and the card identifier to the first device, where the device identifier identifies the second device.

After creating the target card in response to the operation of the user, the second device sends the device identifier of the second device and the card identifier of the target card to the first device, so that the first device specifies the device identifier and the card identifier to update the target card.

With reference to the second aspect, in some possible implementations of the second aspect, the method further includes: sending configuration information of the target card to the first device, where the configuration information is used by the first device to generate the card data.

The configuration information of the target card includes, for example, but is not limited to: a size of the target card, an element (such as a title, an abstract, a picture, or a text description) included in the target card, and a layout of all elements in the target card (that is, locations of all elements in the target card). The second device sends the configuration information to the first device, so that the first device generates the card data based on the configuration information.

With reference to the second aspect, in some possible implementations of the second aspect, the target card corresponds to an application installed on the second device; or the target card is an empty card created on the second device.

The target card may correspond to an application installed on the second device. That is, the target card may be a card corresponding to an application installed on the second device, for example, a card corresponding to Sports and Health. The target card may alternatively be an empty card created on the second device. That is, an application corresponding to the target card is not installed on the second device, and the empty card may be used to display a push notification of any application. For example, an application such as News, Sports, or Sports and Health is not installed on the second device, but related content of the application may be displayed by using the empty card. In this way, memory of the second device can be saved. In addition, in a case in which an application is not installed, a user can receive related content of the application in a form of a card, thereby greatly improving user experience.

With reference to the second aspect, in some possible implementations of the second aspect, in a case in which the target card is an empty card created on the second device, the method further includes: sending user feedback to the first device in response to an operation of the user, where the user feedback is used to reflect a preference of the user for the card data.

The empty card may be used to display related content of any application. In this way, the user may feed back, by operating the second device, a preference for card data corresponding to an application currently pushed on the empty card, so that the first device determines, based on the user feedback, whether to continue pushing the card data corresponding to the application to the second device. In other words, the first device may subsequently push only content that the user is interested in, which helps improve user experience.

With reference to the second aspect, in some possible implementations of the second aspect, the first device is a server of the application corresponding to the target card; and the receiving a card identifier and card data from a first device includes: receiving, from a push server, the card identifier and the card data from the first device, where the push server is configured to actively push card data to the second device.

With reference to the second aspect, in some possible implementations of the second aspect, the first device is a device discovered by the second device; and the receiving a card identifier and card data from a first device includes: receiving the card identifier and the card data from the first device.

With reference to the second aspect, in some possible implementations of the second aspect, the first device and the second device meet at least one of the following: the first device and the second device have a same account; the first device and the second device are associated with a same device; or the first device is a device authorized by the second device.

The first device and the second device may be devices having a same account, or the first device and the second device are associated with a same device, or the first device is a device authorized by the second device. This helps avoid a malicious attack from the first device, and further helps ensure security of the second device.

According to a third aspect, this application provides an electronic device, including a module configured to implement the method in any one of the first aspect and the possible implementations of the first aspect, or including a module configured to implement the method in any one of the second aspect and the possible implementations of the second aspect. It should be understood that each module may implement a corresponding function by executing a computer program.

According to a fourth aspect, this application provides an electronic device, including a processor. The processor is configured to perform the method according to any one of the first aspect and the possible implementations of the first aspect, or is configured to perform the method according to any one of the second aspect and the possible implementations of the second aspect.

Optionally, the electronic device may further include a memory, configured to store computer-readable instructions. The processor reads the computer-readable instructions, so that the electronic device can implement the methods described in the foregoing aspects.

Optionally, the electronic device may further include a communication interface. The communication interface is used by the electronic device to communicate with another device. For example, the communication interface may be a transceiver, a circuit, a bus, a module, or another type of communication interface.

According to a fifth aspect, this application provides a chip system. The chip system includes at least one processor, configured to support implementation of functions in any one of the first aspect and the possible implementations of the first aspect, or configured to support implementation of functions in any one of the second aspect and the possible implementations of the second aspect, for example, receiving or processing data and/or information in the foregoing method.

In a possible design, the chip system further includes a memory. The memory is configured to store program instructions and data. The memory is located inside or outside the processor.

The chip system may include a chip, or may include a chip and another discrete component.

According to a sixth aspect, this application provides a computer-readable storage medium. The storage medium stores computer-readable instructions. When the computer-readable instructions are executed by a computer, the computer is enabled to implement the method in any one of the first aspect and the possible implementations of the first aspect, or implement the method in any one of the second aspect and the possible implementations of the second aspect.

According to a seventh aspect, this application provides a computer program product. The computer program product includes computer-readable instructions. When the computer-readable instructions are run by a computer, the computer is enabled to implement the method in any one of the first aspect and the possible implementations of the first aspect, or implement the method in any one of the second aspect and the possible implementations of the second aspect.

It should be understood that the third aspect to the seventh aspect of this application correspond to the technical solutions of the first aspect and the second aspect of this application, and beneficial effects achieved in the aspects and corresponding feasible implementations are similar. Details are not described again.

### BRIEF DESCRIPTION OF DRAWINGS

FIG. 1 is a diagram of a structure of an electronic device according to an embodiment of this application;
FIG. 2 is a diagram of cards according to an embodiment of this application;
FIG. 3 is a diagram of an architecture of a system applicable to a card update method according to an embodiment of this application;
FIG. 4 is a schematic flowchart of a card update method according to an embodiment of this application;
FIG. 5 is a schematic flowchart of interaction between functional modules according to an embodiment of this application;
FIG. 6 is another schematic flowchart of interaction between functional modules according to an embodiment of this application; and
FIG. 7 is still another schematic flowchart of interaction between functional modules according to an embodiment of this application.

### DESCRIPTION OF EMBODIMENTS

The following describes technical solutions of this application with reference to accompanying drawings.

The method provided in embodiments of this application may be applied to an electronic device such as a mobile phone, a tablet computer, a smartwatch, a smart speaker, a wearable device, a vehicle-mounted device, an augmented reality (augmented reality, AR)/virtual reality (virtual reality, VR) device, a notebook computer, a personal computer (personal computer, PC), an ultra-mobile personal computer (ultra-mobile personal computer, UMPC), a netbook, a personal digital assistant (personal digital assistant, PDA), or a distributed device.

It should be noted that a specific type of the electronic device is not limited in this embodiment of this application.

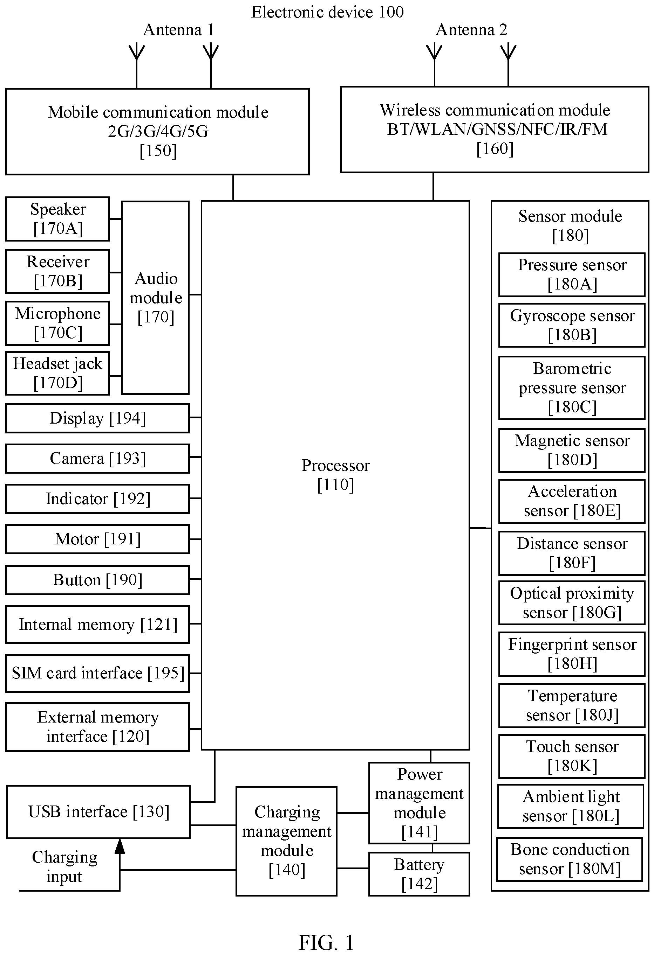

For example, FIG. 1 is a diagram of a structure of an electronic device 100. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include one or more of an application processor (application processor, AP), a microcontroller unit (microcontroller unit, MCU), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and the like. Different processing units may be independent components, or may be integrated into one or more processors.

The application processor outputs a sound signal through the audio module 170 (for example, the speaker 170A), or displays an image or a video on the display 194.

The controller may be a nerve center and a command center of the electronic device 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

The processor 110 may perform different operations by executing the instructions, to implement different functions. For example, the instructions may be instructions pre-stored in the memory before delivery of the device, or may be instructions read from a new application (application, APP) after a user installs the app during use. This is not limited in this embodiment of this application.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a secure digital input/output interface (secure digital input and output, SDIO), a pulse code modulation (pulse code modulation, PCM) interface, a universal asynchronous receiver/transmitter (universal asynchronous receiver/transmitter, UART) interface, a universal synchronous asynchronous receiver/transmitter (universal synchronous asynchronous receiver/transmitter, USART) interface, a mobile industry processor interface (mobile industry processor interface, MIPI), a general-purpose input/output (general-purpose input/output, GPIO) interface, a SIM interface, a USB interface, and/or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device.

It may be understood that an interface connection relationship between modules illustrated in this application is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the external memory, the display 194, the camera 193, the wireless communication module 160, and the like. The power management module 141 may further be configured to monitor parameters such as a battery capacity, a quantity of battery cycles, and a battery state of health (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a fifth generation (5th generation, 5G) communication system, BT, a GNSS, a WLAN, NFC, FM, an IR technology, and/or the like. The GNSS may include a global positioning system (global positioning system, GPS), a GNSS, a BeiDou Navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED (Mini-LED), a micro-LED (Micro-LED), a micro-OLED (Micro-OLED), a quantum dot light emitting diode (quantum dot light emitting diode, QLED), or the like. In some embodiments, the electronic device 100 may include one or more displays 194.

The electronic device 100 may implement a photographing function through the ISP, the camera 193, the video codec, the GPU, the display 194, the application processor, and the like.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transformation or the like on frequency energy.

The video codec is configured to compress or decompress a digital video. The electronic device 100 may support one or more video codecs. Therefore, the electronic device 100 may play or record videos in a plurality of coding formats, for example, moving picture experts group (moving picture experts group, MPEG)-1, MPEG-2, MPEG-3, MPEG-4, and the like.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various functional applications and data processing of the electronic device 100. The internal memory 121 may include a program storage area and a data storage area. The program storage area may store an operating system, an application required by at least one function (for example, a sound playing function or an image playing function), and the like. The data storage area may store data (for example, audio data or a phone book) and the like created when the electronic device 100 is used. In addition, the internal memory 121 may include a high-speed random access memory, or may include a non-volatile memory, for example, at least one magnetic disk storage device, a flash memory, or a universal flash storage (universal flash storage, UFS).

In addition, the electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may listen to music or answer a call in a hands-free mode over the speaker 170A.

The receiver 170B, also referred to as an "earpiece", is configured to convert an audio electrical signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound by moving a human mouth close to the microphone 170C, to input a sound signal to the microphone 170C. At least one microphone 170C may be disposed in the electronic device 100. In some other embodiments, two microphones 170C may be disposed in the electronic device 100, to implement a noise reduction function, in addition to collecting a sound signal. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power on/off button (or referred to as a power button), a volume button, and the like. The button 190 may be a mechanical button, or may be a touch button. The electronic device 100 may receive a button input, and generate a button signal input related to user setting and function control of the electronic device 100.

The motor 191 may generate a vibration prompt. The motor 191 may be configured to provide an incoming call vibration prompt and touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or more SIM card interfaces. The SIM card interface 195 can support a nano-SIM card, a micro-SIM card, a SIM card, and the like. A plurality of cards may be inserted into a same SIM card interface 195. The plurality of cards may be of a same type or different types. The SIM card interface 195 may be compatible with different types of SIM cards. The SIM card interface 195 may also be compatible with an external memory card. The electronic device 100 interacts with a network through the SIM card, to implement functions such as calling and data communication. In some embodiments, the electronic device 100 uses an eSIM, namely, an embedded SIM card. The eSIM card may be embedded into the electronic device 100, and cannot be separated from the electronic device 100.

The structure illustrated in this application does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by hardware, software, or a combination of software and hardware.

For ease of clearly describing the technical solutions in embodiments of this application, the following descriptions are first provided.

First, in embodiments of this application, the terms such as "first" and "second" are used to distinguish between same items or similar items having basically a same function and effect. For example, a first device and a second device are merely intended to distinguish between different devices, and do not limit a sequence thereof. A person skilled in the art may understand that the terms such as "first" and "second" do not limit a quantity and a location, and the terms such as "first" and "second" do not necessarily limit a difference.

Second, in embodiments of this application, the terms "include", "have", and any variations thereof are intended to cover a non-exclusive inclusion. For example, an apparatus, system, product, or device including a series of module assemblies, modules, or units is not necessarily limited to those module assemblies, modules, or units explicitly listed, but may include other module assemblies, modules, or units not explicitly listed or inherent to the apparatus, system, product, or device.

Third, in embodiments of this application, "and/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects, but does not exclude an "and" relationship between the associated objects. A specific meaning represented by the character "/" may be understood with reference to the context.

For ease of understanding, the following briefly describes terms used in this application.
1. A card may also be referred to as an atomic widget, a widget, a service widget (service widget), or the like. A name of the card is not limited in this application. The card can display some key information elements to a user, to implement a function of auxiliary display. The card includes, for example, but is not limited to: an information card such as Weather, Schedule, Sports and Health, and Clock, and a function card such as Music Player and Video Player. For brevity, no enumeration is provided herein.
2. A card user is a host application that displays card content, and controls a location of the card displayed on the host application, for example, a desktop or HiBoard.
3. A card provider is an application that controls display content, a control layout, and a tap event of a card, for example, an application such as Clock, Weather, Schedule, Sports and Health, and Music Player.

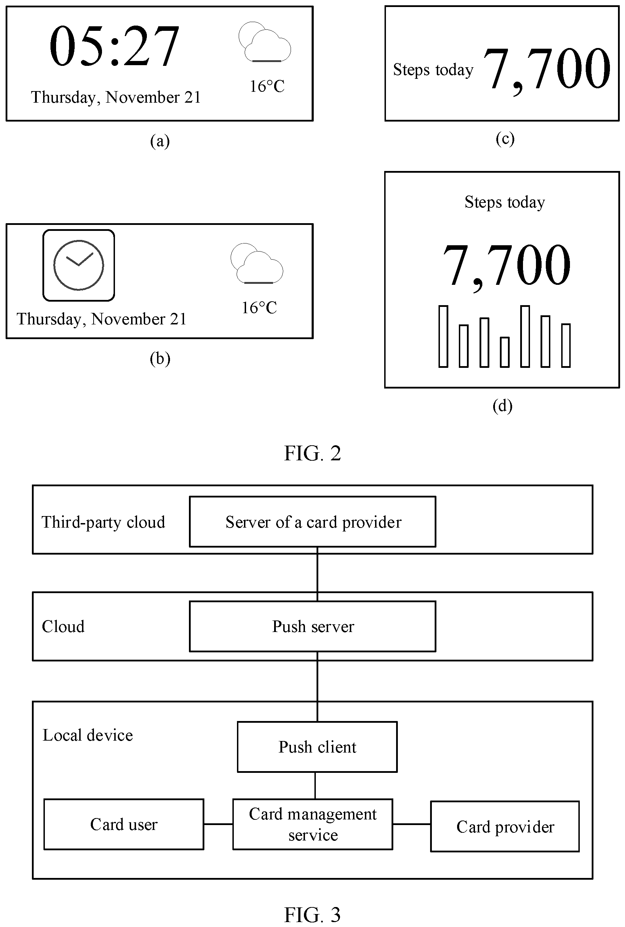

FIG. 2 is a diagram of cards according to an embodiment of this application. (a) in FIG. 2 and (b) in FIG. 2 show cards corresponding to two types of Clock, and (c) in FIG. 2 and (d) in FIG. 2 show cards corresponding to two types of Sports and Health.

As shown in (a) in FIG. 2 and (b) in FIG. 2, two cards corresponding to Clock include same elements (such as a title, an abstract, a picture, and a text description), but have different styles. Elements included in the two cards include a time, a current date, and weather, but the two cards have different display styles for the time. As shown in (c) in FIG. 2 and (d) in FIG. 2, two cards corresponding to Sports and Health include different elements and have different styles. Elements included in a card shown in (c) in FIG. 2 include a title "Steps today" and a specific quantity of steps. Elements included in a card shown in (d) in FIG. 2 include a title "Steps today", a specific quantity of steps, and a bar chart of exercise data of the user. A size of the card shown in (c) in FIG. 2 is 1×2, a size of the card shown in (d) in FIG. 2 is 2×2, and locations of elements included in the two cards are different.

It should be understood that styles of the cards shown in FIG. 2 are merely an example, and should not constitute any limitation on this embodiment of this application. In another embodiment, the card may include more or fewer elements, and a style and a location of each element are not limited in this application.

Currently, most electronic devices provide a card function, and can display more key information elements to the user, for example, a card such as Schedule, Weather, Music Player, and Video Player. Usually, the electronic device may launch a card provider, and obtain card data via the card provider, to update the card. However, a power consumption problem caused by frequently launching the card provider is severe.

Therefore, to resolve the power consumption problem caused by frequently launching the card provider in a card update process, this application provides a card update method. A first device generates card data corresponding to a target card, and actively sends a card identifier and the card data to a second device based on a device identifier, so that the second device updates the target card based on the card identifier and the card data. Throughout the process, the second device does not need to launch a provider of the target card. In addition, the provider of the target card does not need to reside in the background of the second device. This can greatly save system resources and reduce power consumption of the second device.

For ease of understanding the card update method provided in this application, with reference to FIG. 3, the following describes in detail an architecture of a system applicable to the card update method provided in this application.

FIG. 3 is a diagram of an architecture of a system applicable to a card update method according to an embodiment of this application.

As shown in FIG. 3, the system includes a local device, a cloud, and a third-party cloud. The third-party cloud is a cloud of a card provider, and the third-party cloud is used to process and compute card data of a card. The cloud is used as a proxy of the third-party cloud to send a push notification to a corresponding local device, and may also be used to filter and monitor pushed information. The local device is an electronic device on which a target card is created, for example, may be an electronic device such as a mobile phone, a tablet computer, or a netbook. The following describes in detail modules included in the local device and functions of the modules.

The local device includes a card user, a card management service, a card provider, and a push client. The card user and the card management service may communicate with each other, the card management service and the card provider may communicate with each other, and the push client and the card management service may communicate with each other. The foregoing communication belongs to inter-process communication. That is, the card user, the card management service, the card provider, and the push client are considered as different processes.

The card provider is configured to control display content, a control layout, and a tap event of a card. The card user can display card content and control a location of the card displayed on the card user. The card management service is used to manage a resident proxy service of a card added in a system, including managing and using a card object and periodically refreshing the card.

In this application, the third-party cloud may be considered as a server of the card provider, and may be used to generate card data corresponding to the target card and specify a device identifier, to send the card identifier and the card data to the local device by using a push server (namely, the cloud in FIG. 3), so that the local device updates the target card based on the card identifier and the card data.

It should be understood that devices included in the system shown in FIG. 3 are merely examples, and should not constitute any limitation on this embodiment of this application. For example, in this application, the third-party cloud may be replaced with an electronic device discovered by the local device. That is, an electronic device discovered by the local device may also push the card data to the local device.

The following describes in detail the card update method provided in this application with reference to specific embodiments.

It should be understood that the following embodiments are described from a perspective of interaction between a first device and a second device, but shall not constitute any limitation on an execution body of embodiments of this application. The method provided in embodiments of this application can be performed, provided that a program that records code of the method provided in embodiments of this application can be run. For example, the first device may be replaced with a component (for example, a chip or a chip system) configured in the first device, or another functional module that can invoke a program and execute the program. The second device may be replaced with a component (for example, a chip or a chip system) configured in the second device, or another functional module that can invoke a program and execute the program. This is not limited in embodiments of this application.

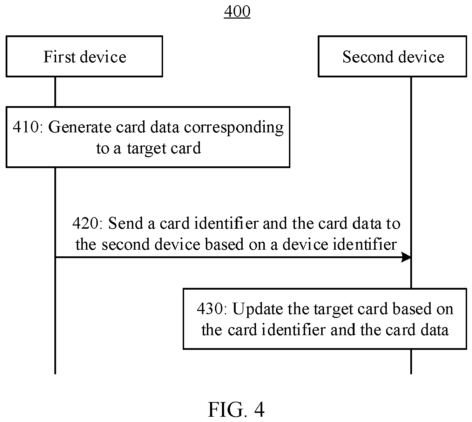

FIG. 4 is a schematic flowchart of a card update method according to an embodiment of this application. As shown in FIG. 4, the method 400 may include step 410 to step 430. The following describes the steps shown in FIG. 4 in detail.

Step 410: The first device generates card data corresponding to a target card.

The target card is a to-be-updated card installed in the second device. The card data is data required for card update. A news card is used as an example. The card data includes a news title, a news abstract, a news cover picture, and the like.

The first device generates the card data corresponding to the target card, so that the card data is sent to the second device when the target card needs to be updated, to update the card.

Optionally, before generating the card data corresponding to the target card, the first device may further receive configuration information of the target card from the second device, and generate the card data based on the configuration information.

The configuration information of the target card includes, for example, but is not limited to: a size of the target card, an element (such as a title, an abstract, a picture, or a text description) included in the target card, and a layout of all elements in the target card (that is, locations of all elements in the target card). The news card is used as an example. The configuration information may include a size of the news card, which is 1×4. Elements included in the news card are a news title, a news abstract, a news cover picture, and the like, as well as locations of the elements such as the news title, the news abstract, and the news cover in the card.

It may be understood that if the configuration information of the target card varies, the card data may vary. For example, if a size and an element of the target card vary, the card data that needs to be generated also varies.

The first device receives the configuration information of the target card from the second device, and generates the card data based on the configuration information, to update the target card.

The news card is used as an example. If the configuration information of the target card received by the first device from the second device indicates that elements included in the target card include a news title, a news abstract, and a news cover picture, the first device generates the card data based on the configuration information, that is, what the news title is, what the news abstract is, and the news cover picture.

Optionally, before generating the card data corresponding to the target card, the first device may further receive a device identifier and a card identifier from the second device. In other words, the second device may further send the device identifier and the card identifier to the first device.

Before generating the card data, the first device may receive the device identifier and the card identifier from the second device, so that the first device specifies, based on the device identifier, that the card data is sent to the second device, and specifies, based on the card identifier, a card whose card data needs to be updated. In this way, when there are a plurality of devices and each device has a plurality of cards, it is convenient for the first device to specify a device and a card whose card data needs to be updated.

Step 420: The first device sends the card identifier and the card data to the second device based on the device identifier. Correspondingly, the second device receives the card identifier and the card data.

The device identifier identifies the second device, the card identifier identifies the target card, and the card data is used to update the target card in the second device.

In a possible design, the first device is a server (the third-party cloud shown in FIG. 3) of an application corresponding to the target card. Sending the card identifier and the card data to the second device based on the device identifier includes: sending, by using a push server, the card identifier and the card data to the second device corresponding to the device identifier, where the push server is configured to actively push card data to the second device. For example, after generating the card data, the server of the application corresponding to the target card specifies the device identifier and the card identifier, and sends the specified device identifier, the card identifier, and the generated card data to the push server. The push server determines the corresponding second device based on the device identifier, and sends the card identifier and the card data to the second device, so that the second device updates, based on the card data, the target card corresponding to the card identifier.

In another possible design, the first device is a device discovered by the second device. That the first device sends the card identifier and the card data to the second device based on the device identifier includes: The first device sends the card identifier and the card data to the second device corresponding to the device identifier. Correspondingly, the second device receives the card identifier and the card data. For example, after the first device is discovered by the second device, the first device generates the card data, and may directly send the card identifier and the card data to the second device.

Optionally, in a case in which the first device is a device discovered by the second device, the card data pushed by the first device may be updated depending on a scenario. For example, if the first device is a vehicle-mounted device, the first device may push card data of a vehicle status to the second device, for example, a current vehicle speed, fuel consumption, and a distance from a vehicle ahead. For another example, if the first device is a router, the first device may push current traffic information to the second device.

Optionally, the first device and the second device meet at least one of the following: the first device and the second device have a same account; the first device and the second device are associated with a same device; or the first device is a device authorized by the second device. This helps avoid a malicious attack from the first device, and further helps ensure security of the second device.

For example, the second device may monitor device connections. In a case in which it is found that a device has a same account as the second device, or is associated with a same device as the second device, or is a device authorized by the second device, the second device sends the device identifier and the card identifier to the device, so that the device pushes the card data to the second device based on the device identifier and the card identifier.

It should be understood that the foregoing relationships between the first device and the second device are merely an example, and should not constitute any limitation on this embodiment of this application. For example, in another embodiment, after discovering the first device, the second device may further perform identity verification on the first device, and when the verification is successful, the first device is then allowed to push the card data to the second device.

Step 430: The second device updates the target card based on the card identifier and the card data.

After receiving the card identifier and the card data, the second device may find a corresponding target card based on the card identifier, and update the target card based on the card data.

Optionally, the method 400 in FIG. 4 further includes: Before receiving the card identifier and the card data from the first device, the second device creates the target card in response to an operation of a user, and sends the device identifier and the card identifier to the first device.

For example, the target card is created in response to an operation of sliding up a desktop by the user, an operation of touching and holding an icon of an application, or the like.

Optionally, the target card corresponds to an application installed on the second device; or the target card is an empty card created on the second device.

The target card may correspond to an application installed on the second device. That is, the target card may be a card corresponding to an application installed on the second device, for example, a card corresponding to Sports and Health. The target card may alternatively be an empty card created on the second device. That is, an application corresponding to the target card is not installed on the second device, and the empty card may be used to display a push notification of any application. For example, an application such as News or Sports and Health is not installed on the second device, but related content of the application may be displayed by using the empty card. In this way, memory of the second device can be saved. In addition, in a case in which an application is not installed, a user can receive related content of the application in a form of a card, thereby greatly improving user experience.

It may be understood that a user operation of creating the empty card is different from a user operation of creating the card corresponding to the application installed on the second device. However, the foregoing user operation is not specifically limited in this application.

Optionally, when the target card is the empty card created on the second device, the method 400 further includes: receiving user feedback from the second device, where the user feedback is used to reflect a preference of a user for the card data; and determining, based on the user feedback, whether to continue pushing the card data to the second device.

The empty card may be used to display related content of any application. In this way, the user may feed back, by operating the second device, a preference for card data corresponding to an application currently pushed on the empty card. For the first device, the user feedback is received from the second device, and then the first device determines, based on the user feedback, whether to continue pushing the card data corresponding to the application to the second device. In other words, the first device may push content that the user is interested in, which helps improve user experience.

It may be understood that, in a case in which the target card is an empty card, when the user carries the second device into a preset range (for example, a scenic spot), a server corresponding to the scenic spot may push a popular tourist spot, a specialty, and the like of the scenic spot to the second device in a form of a card. Through notification in a form of a card, content expected to be pushed can be fully and diversely displayed, which helps improve user experience.

Optionally, when the target card is the empty card created on the second device, the card data may include related content of an application displayed by using the card and a style of the target card. The style of the target card may include, for example, a size of the target card, an element included in the target card, and a layout of all elements.

Based on the foregoing technical solution, the first device generates the card data corresponding to the target card, and actively sends the card identifier and the card data to the second device based on the device identifier, so that the second device updates the target card based on the card identifier and the card data. Throughout the process, the second device does not need to launch a provider of the target card. In addition, the provider of the target card does not need to reside in the background of the second device. This can greatly save system resources and reduce power consumption of the second device.

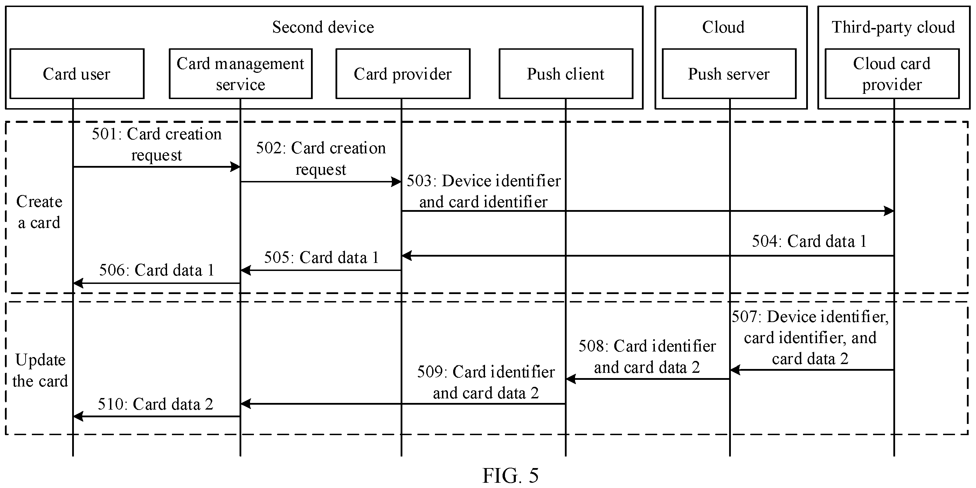

Embodiments shown in FIG. 5 to FIG. 7 are examples of the method 400 shown in FIG. 4. With reference to FIG. 5 to FIG. 7, the following describes a detailed process of interaction between functional modules of the first device and the second device in detail.

FIG. 5 is a schematic flowchart of interaction between functional modules according to an embodiment of this application. In the embodiment shown in FIG. 5, a card corresponds to an application installed on a second device. That is, an application corresponding to the card is installed on the second device.

Step 501: A card user sends a card creation request to a card management service. Correspondingly, the card management service receives the card creation request.

In response to an operation of sliding up a desktop or touching and holding an icon of an application by a user, the card user sends the card creation request to the card management service.

Step 502: The card management service sends the card creation request to a card provider. Correspondingly, the card provider receives the card creation request.

After receiving the card creation request from the card user, the card management service launches the card provider, and sends the request to the card provider, to request the card provider to create the card. In most cases, the application does not reside in the background. That the card provider is launched (that is, the application is launched) may be understood as: if the application is not running (not in the background or in the foreground), the application needs to be started, and if the application is in the background or in the foreground, the application does not need to be started.

Step 503: The card provider sends a device identifier and a card identifier to a cloud card provider.

The device identifier identifies the second device, for example, may be an identifier (identifier) of the second device or a push token (push token). The card identifier identifies the card. The cloud card provider is deployed on a server (the third-party cloud shown in FIG. 3) of an application corresponding to the card.

After receiving the card creation request, the card provider creates the card, and sends the device identifier and the card identifier to the cloud card provider, so that the cloud card provider specifies the device identifier and the card identifier to push card data of the card.

Optionally, the card provider may further send configuration information of the card to the cloud card provider, for example, a size of the card, an element included in the card, and a layout of all elements in the card. For more detailed descriptions, refer to related descriptions in FIG. 4. Details are not described herein again.

Step 504: The cloud card provider sends card data 1 to the card provider.

After receiving the device identifier and the card identifier, the cloud card provider stores the identifiers, and sends the card data 1 to the card provider.

A news card is used as an example. The card data 1 includes a news title, a news abstract, a news cover picture, and the like.

Step 505: The card provider sends the card data 1 to the card management service.

Step 506: The card management service sends the card data 1 to the card user.

After receiving the card data 1, the card management service sends the card data 1 to the card user. Correspondingly, the card user receives the card data 1, and displays the card data 1 through a user interface.

The foregoing step 501 to step 506 are a card creation process, and the following step 507 to step 510 are a card update process.

Step 507: The cloud card provider sends the device identifier and the card identifier to a push server.

When a push condition is met, the cloud card provider specifies the device identifier, the card identifier, and card data 2, and sends the device identifier, the card identifier, and the card data 2 to the push server. For example, the push condition includes: the third-party cloud needs to update a card of the user, or update a card at an interval of preset duration.

Step 508: The push server sends the card identifier and the card data 2 to a push client.

After receiving the device identifier, the card identifier, and the card data 2, the push server determines, based on the device identifier, the second device corresponding to the device identifier, and sends the card identifier and the card data 2 to the push client of the second device.

Step 509: The push client sends the card identifier and the card data 2 to the card management service.

The push client sends the card identifier and the card data 2 to the card management service, to request to update the card data of the card.

Step 510: The card management service sends the card data 2 to the card user.

After receiving the card identifier and the card data 2, the card management service determines, based on the card identifier, a card corresponding to the card identifier, and sends the card data 2 to the card user, to update the card. After receiving the card data 2, the card user displays updated card data 2 on the card through the user interface.

It can be learned that in the embodiment shown in FIG. 5, in a card update process, the cloud card provider actively sends the card identifier and the card data to the second device by using the push server, so that the second device updates the card based on the card identifier and the card data. Throughout the card update process, the second device does not need to launch the card provider. In addition, the card provider does not need to reside in the background of the second device. This can greatly save system resources and reduce power consumption of the second device.

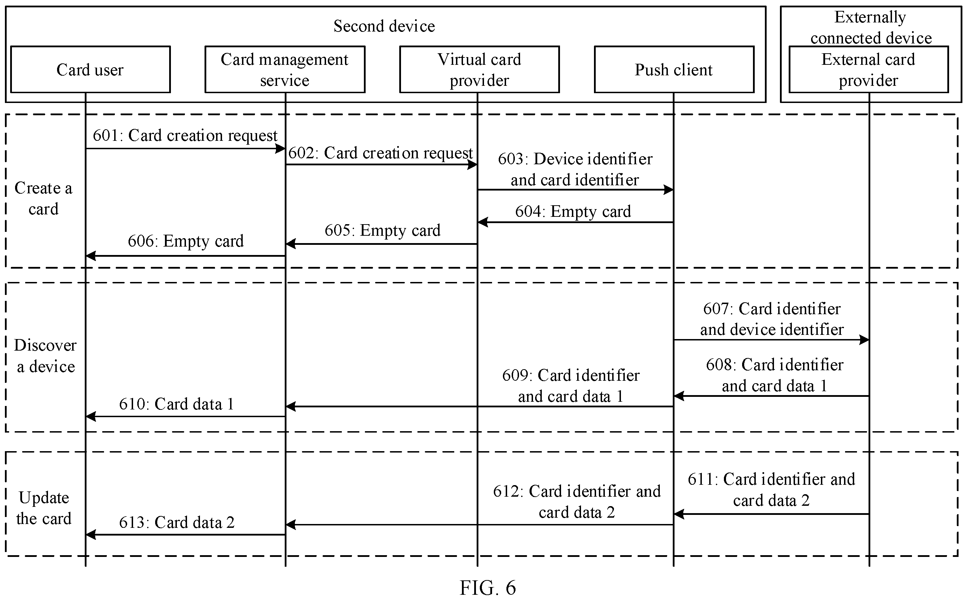

FIG. 6 is another schematic flowchart of interaction between functional modules according to an embodiment of this application. In the embodiment shown in FIG. 6, a card is an empty card created on a second device. That is, an application corresponding to the card is not installed on the second device. An externally connected device is an example of a first device, and the externally connected device is a device discovered by the second device.

In addition, an application corresponding to the card is not installed on the second device. Therefore, a card provider is referred to as a virtual card provider, and the virtual card provider does not need to independently start a process. The virtual card provider may be deployed on a card user, a card management service, or a push client, for example, may be a thread of the card user, the card management service, or the push client.

Step 601: The card user sends a card creation request to the card management service. Correspondingly, the card management service receives the card creation request.

In response to an operation of a user, the card user sends a card creation request to the card management service. It should be understood that the operation of the user may be, for example, touching and holding a desktop. A user operation that triggers creation of an empty card is not limited in this application.

Optionally, the card creation request may alternatively be a card subscription request. In other words, the card user sends the card creation request to the card management service. This is not limited in this application. The card creation request is used as an example for description below.

Step 602: The card management service sends the card creation request to the virtual card provider. Correspondingly, the virtual card provider receives the card creation request.

After receiving the card creation request from the card user, the card management service sends the request to the virtual card provider, to request the virtual card provider to create the card.

Step 603: The virtual card provider sends a device identifier and a card identifier to the push client.

The device identifier identifies the second device, for example, may be an identifier (identifier) of the second device or a push token (push token). The card identifier identifies the card.

After receiving the card creation request, the virtual card provider sends the device identifier and the card identifier to the push client.

Optionally, the virtual card provider may further send configuration information of the card to the push client, for example, a size of the card, an element included in the card, and a layout of all elements in the card. For more detailed descriptions, refer to related descriptions in FIG. 4. Details are not described herein again.

Step 604: The push client sends the empty card to the virtual card provider.

After receiving the card identifier and the device identifier, the push client stores the foregoing information, and returns an empty card of a default style.

Step 605: The virtual card provider sends the empty card to the card management service.

Step 606: The card management service sends the empty card to the card user.

The foregoing step 601 to step 606 are an empty card creation process, and the following step 607 to step 610 are a device discovering process.

Step 607: The push client sends the device identifier and the card identifier to the externally connected device.

The push client monitors a surrounding device. If an externally connected device (for example, a device connected through Bluetooth or Wi-Fi) is found, the push client sends the device identifier and the card identifier to the externally connected device. More specifically, the push client sends the device identifier and the card identifier to an external card provider of the externally connected device.

Optionally, the externally connected device and the second device meet at least one of the following: the externally connected device and the second device have a same account; the externally connected device and the second device are associated with a same device; or the externally connected device is a device authorized by the second device. This helps avoid a malicious attack from the externally connected device, and further helps ensure security of the second device.

Step 608: The external card provider sends the card identifier and card data 1 to the push client.

The external card provider specifies the device identifier, and sends the card identifier and the card data 1 to the push client of the second device corresponding to the device identifier.

Step 609: The push client sends the card identifier and the card data 1 to the card management service.

Step 610: The card management service sends the card data 1 to the card user.

After receiving the card identifier and the card data 1, the card management service determines, based on the card identifier, a card corresponding to the card identifier, and sends the card data 1 to the card user. After receiving the card data 1, the card user displays the card data 1 on the card through a user interface.

The following step 611 to step 613 are a card update process.

Step 611: The external card provider sends the card identifier and card data 2 to the push client.

When a push condition is met, the external card provider specifies the device identifier, the card identifier, and card data 2, and sends the card identifier and the card data 2 to the push client of the device corresponding to the device identifier. For example, the push condition includes: the externally connected device needs to update a card of the user, or update a card at an interval of preset duration.

Step 612: The push client sends the card identifier and the card data 2 to the card management service.

The push client sends the card identifier and the card data 2 to the card management service, to request to update the card data of the card.

Step 613: The card management service sends the card data 2 to the card user.

After receiving the card identifier and the card data 2, the card management service determines, based on the card identifier, a card corresponding to the card identifier, and sends the card data 2 to the card user, to update the card. After receiving the card data 2, the card user displays updated card data 2 on the card through the user interface.

Optionally, the method in FIG. 6 further includes: The externally connected device receives user feedback from the second device, where the user feedback is used to reflect a preference of the user for the card data; and determining, based on the user feedback, whether to continue pushing the card data to the second device.

The empty card may be used to display related content of any application. In this way, the user may feed back, by operating the second device, a preference for card data corresponding to an application currently pushed on the empty card. For the externally connected device, the user feedback is received from the second device, and then the externally connected device determines, based on the user feedback, whether to continue pushing the card data corresponding to the application to the second device. In other words, the externally connected device may subsequently push only content that the user is interested in, which helps improve user experience.

It can be learned that, in the embodiment shown in FIG. 6, even if a specific application is not installed on the second device, related content of the application may be displayed in a form of a card, thereby greatly improving user experience and reducing memory occupied by the second device. In addition, when the card needs to be updated, the externally connected device may automatically send updated card data to the second device. Throughout the card update process, the second device does not need to launch the card provider, which helps reduce power consumption of the second device.

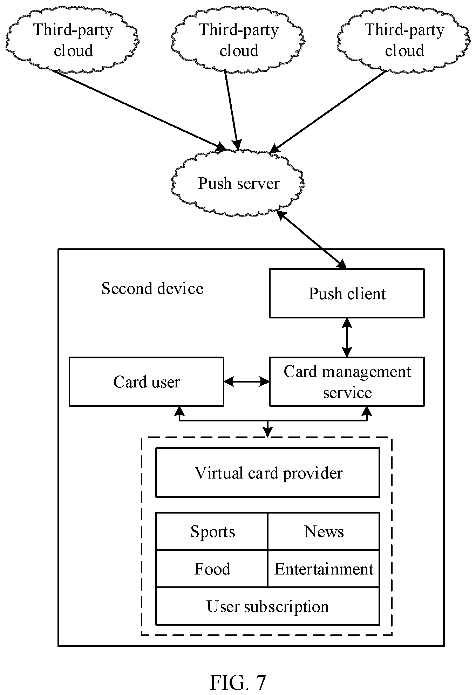

It should be understood that the externally connected device in FIG. 6 may alternatively be replaced with a server of the card provider, that is, a third-party cloud of the application corresponding to the card. FIG. 7 is still another schematic flowchart of interaction between functional modules according to an embodiment of this application. In the embodiment shown in FIG. 7, a card is an empty card created on a second device. That is, an application corresponding to the card is not installed on the second device. A first device is a server of the application corresponding to the card.

In addition, an application corresponding to the card is not installed on the second device. Therefore, a card provider is referred to as a virtual card provider, and the virtual card provider does not need to independently start a process. The virtual card provider may be deployed on a card user, a card management service, or a push client, for example, may be a thread of the card user, the card management service, or the push client.

As shown in FIG. 7, after the virtual card provider creates an empty card, third-party clouds of all applications may push card data by using a push server. A user may also subscribe to a card such as Sports, News, Food, and Entertainment, so that the third-party cloud pushes related content of Sports, News, Food, and Entertainment to the user in a form of a card.

For example, the third-party cloud may specify a device identifier and a card identifier, and send the device identifier, the card identifier, and card data expected to be updated to the push server. The push server sends, based on the device identifier, the card identifier and the card data to a push client corresponding to the device identifier. The push client sends the card identifier and the card data to the card management service, and the card management service sends the card data to the card user based on the card identifier. The card user displays the card data in a form of a card through a user interface. The user can tap a button such as Likes, Favorites, or Refresh based on a preference of the user. In response to feedback of the user, the third-party cloud can subsequently push only content that the user is interested in.

It can be learned that the virtual card provider may be deployed in the card user or the card management service. Therefore, inter-process communication is omitted. Communication between the card user and the virtual card provider, and communication between the card management service and the virtual card provider belong to internal communication, which helps reduce inter-process overheads.

In the embodiment shown in FIG. 7, even if a specific application is not installed on the second device, related content of the application may be displayed in a form of a card, thereby greatly improving user experience and reducing memory occupied by the second device. In addition, when the card needs to be updated, the third-party cloud may automatically send updated card data to the second device by using the push server. Throughout the card update process, the second device does not need to launch the card provider, which helps reduce power consumption of the second device.

An embodiment of this application further provides an electronic device. The electronic device may be, for example, the electronic device shown in FIG. 1. The electronic device includes a corresponding module configured to perform the method in any one of embodiments shown in FIG. 4 to FIG. 7. The module included in the electronic device may be implemented by software and/or hardware.

An embodiment of this application further provides an electronic device. The electronic device may be, for example, the electronic device shown in FIG. 1. A memory in the electronic device is configured to store a computer program. A processor in the electronic device is configured to invoke and execute the computer program, so that the electronic device is enabled to perform steps performed by the first device or the second device in any one of embodiments shown in FIG. 4 to FIG. 7.

This application further provides a chip system. The chip system includes at least one processor, configured to implement the method in any one of embodiments shown in FIG. 4 to FIG. 7, for example, receive or process data and/or information in the foregoing methods.

In a possible design, the chip system further includes a memory. The memory is configured to store program instructions and data. The memory is located inside or outside the processor.

The chip system may include a chip, or may include a chip and another discrete component.

This application further provides a computer program product. The computer program product includes a computer program (which may also be referred to as code or an instruction). When the computer program is run, an electronic device is enabled to implement the method in any one of embodiments shown in FIG. 4 to FIG. 7.

This application further provides a computer-readable storage medium. The computer-readable storage medium stores a computer program (which may also be referred to as code or instructions). When the computer program is run, an electronic device is enabled to implement the method in any one of embodiments shown in FIG. 4 to FIG. 7.

It should be understood that the steps in the foregoing methods may be completed by using a hardware integrated logic circuit in a processor or by using instructions in a form of software. The steps in the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be further understood that the processor in embodiments of this application may be an integrated circuit chip, and has a signal processing capability. In an implementation process, the steps in the foregoing method embodiments are completed by using a hardware integrated logic circuit in the processor, or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. Various methods, steps, and logical block diagrams disclosed in embodiments of this application may be implemented or executed. The general-purpose processor may be a microprocessor, or the processor may be any conventional processor or the like. The steps in the methods disclosed with reference to embodiments of this application may be directly performed by a hardware decoding processor, or may be performed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

Terms such as "unit" and "module" used in this specification may indicate computer-related entities, hardware, firmware, combinations of hardware and software, software, or software being executed. In this application, the "unit" and the "module" may be used alternately.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the embodiments, the foregoing embodiments may be implemented completely or partially in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), or a semiconductor medium (for example, a solid state disk (solid state disk, SSD)).

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computing device (which may be a personal computer, a server, or a network device) to perform all or some of the steps in the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A card update method, applied to a first device, wherein the method comprises:
generating card data corresponding to a target card; and
sending a card identifier and the card data to a second device based on a device identifier, wherein the device identifier identifies the second device, the card identifier identifies the target card, the target card is installed in the second device, and the card data is used to update the target card in the second device.

2. The method according to claim 1, wherein before the generating card data corresponding to a target card, the method further comprises:
receiving the device identifier and the card identifier from the second device.

3. The method according to claim 2, wherein the method further comprises:
receiving configuration information of the target card from the second device; and
the generating card data corresponding to a target card comprises:
generating the card data based on the configuration information.

4. The method according to any one of claims 1 to 3, wherein the target card corresponds to an application installed on the second device; or the target card is an empty card created on the second device.

5. The method according to claim 4, wherein in a case in which the target card is an empty card created on the second device, the method further comprises:
receiving user feedback from the second device, wherein the user feedback is used to reflect a preference of a user for the card data; and
determining, based on the user feedback, whether to continue pushing the card data to the second device.

6. The method according to any one of claims 1 to 5, wherein the first device is a server of the application corresponding to the target card; and
the sending a card identifier and the card data to a second device based on a device identifier comprises:
sending, by using a push server, the card identifier and the card data to the second device corresponding to the device identifier, wherein the push server is configured to actively push card data to the second device.

7. The method according to any one of claims 1 to 5, wherein the first device is a device discovered by the second device; and
the sending a card identifier and the card data to a second device based on a device identifier comprises:
sending the card identifier and the card data to the second device corresponding to the device identifier.

8. The method according to claim 7, wherein the first device and the second device meet at least one of the following:
the first device and the second device have a same account;
the first device and the second device are associated with a same device; or
the first device is a device authorized by the second device.

9. A card update method, applied to a second device, wherein the method comprises:
receiving a card identifier and card data from a first device, wherein the card identifier identifies a target card installed in the second device; and
updating the target card based on the card identifier and the card data.

10. The method according to claim 9, wherein before the receiving a card identifier and card data from a first device, the method further comprises:
creating the target card in response to an operation of a user; and
sending a device identifier and the card identifier to the first device, wherein the device identifier identifies the second device.

11. The method according to claim 10, wherein the method further comprises:
sending configuration information of the target card to the first device, wherein the configuration information is used by the first device to generate the card data.

12. The method according to any one of claims 9 to 11, wherein the target card corresponds to an application installed on the second device; or the target card is an empty card created on the second device.

13. The method according to claim 12, wherein in a case in which the target card is an empty card created on the second device, the method further comprises:
sending user feedback to the first device in response to an operation of the user, wherein the user feedback is used to reflect a preference of the user for the card data.

14. The method according to any one of claims 9 to 13, wherein the first device is a server of the application corresponding to the target card; and
the receiving a card identifier and card data from a first device comprises:
receiving, from a push server, the card identifier and the card data from the first device, wherein the push server is configured to actively push card data to the second device.

15. The method according to any one of claims 9 to 13, wherein the first device is a device discovered by the second device; and
the receiving a card identifier and card data from a first device comprises:
receiving the card identifier and the card data from the first device.

16. The method according to claim 15, wherein the first device and the second device meet at least one of the following:
the first device and the second device have a same account;
the first device and the second device are associated with a same device; or
the first device is a device authorized by the second device.

17. An electronic device, comprising a module configured to implement the method according to any one of claims 1 to 16.

18. An electronic device, comprising a processor and a memory, wherein
the memory is configured to store a computer program; and
the processor is configured to invoke the computer program, to enable the electronic device to perform the method according to any one of claims 1 to 16.

19. A computer-readable storage medium, wherein the storage medium stores a computer program or instructions, and when the computer program or instructions are executed by a computer, the method according to any one of claims 1 to 16 is implemented.

20. A computer program product, wherein the computer program product comprises instructions, and when the instructions are run by a computer, the method according to any one of claims 1 to 16 is implemented.
